# EUROPEAN PATENT APPLICATION

(11) **EP 1 872 660 A1**
(43) Date of publication of application: **02.01.2008**
(21) Application number: 06425437.8
(22) Date of filing: 27.06.2006
(51) Int. Cl.: A21D 6/00

(54) **A pre-treatment process for gluten-free cereal flours destined for use in oven-baked products**

(71) Applicant: Uniriso S.r.l., 42100 Reggio Emilia (IT)
(72) Inventor: Gozzi, Eros,c/o UNIRISO S.R.L., 42010 Reggio Emilia - Fraz.Mancasale (IT)
(74) Representative: Gotra, Stefano

(57) **Abstract**

The flour pre-treatment process includes a first stage in which a quantity of the flour 1 to be treated is measured, followed by a second stage of dry-heating the flour, performed using the means for heating 2. The flour is moved around during the heating stage.

## Description

The invention relates to a pre-treatment process for gluten-free cereal flours, such as rice, meal, Turkish grain, etc. applicable to the food industry for products that will then go on to be oven-baked.

The process enables dough to be easily formed and kneaded, giving a crisp final product with no gritty texture to it.

In the prior art, the production of food such as pastry, or biscuits using gluten-free cereal flours has always been difficult, due to the difficulty of obtaining starch agglomeration in the mixing/kneading stage and to the poor adhesion of the starch granules in the oven baked product after cooking, which crumbles and takes on a gritty or sandy texture upon biting.

This is due to the total absence of gluten, which makes water absorption (gelatinisation) of starch slower, with consequently slower and more difficult aggregation of the flour for forming the mixture; also, for instance during the cooking stage of a biscuit, the protein film of gluten is missing, with its supporting function of binding dehydrated starch granules, sugars and fats together, to form a crisp, light and porous structure.

As a consequence of this gluten-free biscuits made with prior-art gluten-free flours are badly aggregated, break easily even during transport, and taste unpleasantly sandy on eating.

Some processes are commonly used in the attempt to obviate the above mentioned drawbacks.

A first known process for producing gluten-free flours suitable for forming kneadable doughs includes softening flour in abundant water, heating the mixture up to about 80°C, then cooling it until the mixture is gelatinous enough for the production of savoury, sweet or pasta dough. The crystalline structure of starch absorbs water and is pre-cooked, as the starches break the chemical bonds to form a specific gel.

This process is known as "gelatinization".

A second known process involves the steaming of flour at a temperature from 100 to 120°C, and its subsequent drying to make the flour suitable for formation of pastry dough products.

A third known process for producing flours suitable for the formation of doughs and then for preparing oven-baked products involves adding some agglomerating and gelatinizing substances to the flour, such as isinglass, egg-white, vegetable pectin, etc., in order to obtain a cohesive and elastic dough as desired.

Prior-art processes for obtaining gluten-free flours suitable for kneadable doughs and particularly for preparing oven-baked products such as bread and biscuits however present various drawbacks.

The processes involving gelatinization, i.e. a pre-cooking stage using water, also require considerable amounts of energy to heat the watery part up to temperatures of approximately 80 - 90°C. Furthermore the above process produces a gelatinous dough, no longer reversible to flour, which must therefore be sent on immediately to a further process, for instance for pastry production.

As the starch granules have absorbed much water, the pastry thus produced no longer gives the typical "al dente" bite response, but is smooth and slippery, and thus exhibits unattractive aesthetic and texture characteristics.

Moreover, a possible preparation of oven-baked products with the dough will present difficulties in the yeasting stage and problems connected with the frailness of the product.

The second known process of steaming, performed at a temperature of about 100 - 120°C, will intensify a process of deterioration in the heat-sensitive substances (particularly the vitamins), and is also expensive. The same drawbacks as for the gelatinisation treatment are also present in this case as they are connected to use of water in the pre-cooking stage.

The third process involving the addition of agglutinating substances, by definition includes the introduction of substances other than those which should be present in the composition of the final product.

The main aim of the present invention is to obviate the above mentioned drawbacks by pre-treating the gluten-free cereal flours in order to obtain a dry flour to be either stored or used immediately for solid and elastic kneadable doughs which are particularly suitable for oven-baked products, without adding foreign substances.

A further aim of the present invention is to preserve the heat-sensitive elements of the flour (such as aromatic substances, vitamins, etc.) which are destroyed during known pre-cooking or gelatinisation processes.

Further characteristics and advantages of the invention will better emerge from the detailed description made herein below of three preferred embodiments thereof, illustrated by way of non-limiting example in the accompanying figures of the drawings, in which:
Figure 1 is a block diagram illustrating a pre-treatment process for gluten-free cereal flours destined for use in the oven-baked products of the process;
Figure 2 schematically illustrates means for realizing the process of figure 1 in a first preferred embodiment;
Figure 3 schematically illustrates means for realizing the process of figure 1 in a second preferred embodiment;
Figure 4 schematically illustrates means for realizing the process of figure 1 in a third preferred embodiment.

A preferred embodiment of a process for pre-treatment of gluten-free cereal flours for use in oven-baked products comprises the following stages:
taking a pre-determined quantity of flour 1;
dry-heating the flour 1 using the means for heating 2;
keeping the flour 1 in motion about the means for heating 2 during the heating stage;

The movement stage is preferably performed by a motor 3.

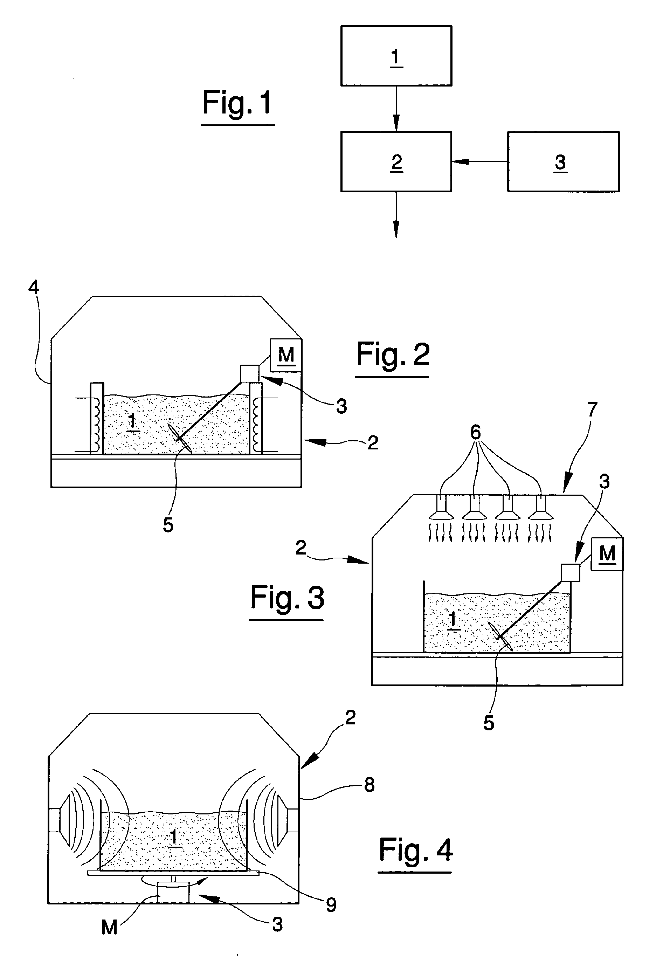

In figure 2 a quantity of flour 1, treated by the means for heating 2 and a blender motor 3 is shown in a first embodiment.

The means for heating 2 comprise an oven 4, for instance an electric or a gas oven, while the blender motor comprises a blade blender 5, set in rotation by a motor M of known type.

Instead of the blade blender 5 other known mechanical devices for moving flour can be used, such as belts, screws, rotary bases or anything else suitable.

The flour should be brought to a temperature of at least 40° C for at least 10 minutes.

Though figure 2 shows the heating at a temperature of 40°C, in reality the heating is effective at between 40 and 90°C for a period of between 10 and 30 minutes.

Figure 3 shows a quantity of flour 1 treated by the means for heating 2 and by the blender motor 3 in a second embodiment.

The means for heating 2 comprise a plurality of infrared lamps arranged at the top of a chamber 7 containing the flour 1.

The plurality of infrared lamps 6, each producing about 150 watts, are positioned at a distance of about 400 mm from the flour 1.

Also in this case the blender motor 3 comprises a blade blender 5, set in rotation by a motor M of known type.

The flour should be brought to a temperature of at least 40 °C for at least 20 minutes.

The heating level as shown in figure 3, for a quantity of about 12.5 kg flour, for 20 minutes and with an overall lamp power set at 450 Watts, will in reality be fully effective after a period of between 10 and 30 minutes at a rated power of between 300 and 750 Watts; the distance between the lamps and the flour 1 can range between 200 and 600 mm.

Figure 4 shows a quantity of flour 1 treated by the means for heating 2 and by a blender motor 3, in a third embodiment.

The means for heating 2 comprise a microwave oven 8 and the blender motor comprises a motor M of known type, which sets in rotation a rest plane 9 on which the flour 1 is arranged.

For a quantity of about 200 grams flour, approximately 150 watts power should be delivered for 2 minutes.

The heating as shown in figure 4, with an oven power output of 150 watts, will in reality be fully effective with a power output ranging between 100 and 450 watts for between 1 and 5 minutes.

Following exhaustive testing the applicant has determined a process for treating gluten-free flours which even with small quantities of water renders them easily kneadable, with a cohesive and elastic dough, both for pasta or noodle dough and for oven-baked production.

It has also been established that the dough resulting from treated gluten-free flours yeasts more easily and the resulting oven-baked products are as crisp as those prepared with normal flour (containing gluten).

The invention has the further advantage of a markedly lower energy consumption, as only flour and no water has to be heated.

A further advantage is that temperature/time scarcely affects the product's characteristics, particularly the heat-sensitive substances, such as vitamins, organic esters etc.

## Claims

1. A pre-treatment process for gluten-free cereal flours destined for use for oven-baked products, **characterized in that** it comprises the following stages:
measuring out a pre-determined quantity of flour (1);
dry-heating the flour (1) using means for heating (2).

2. The process of claim 1 **characterized in that** the process includes a stage of moving the flour (1) about the means for heating (2) during the heating stage.

3. The process of claim 2, **characterized in that** the stage of moving is performed by a blender motor (3).

4. The process of claim 2, **characterized in that** the means for heating (2) comprise an oven (4) which is preferably powered by electric or gas.

5. The process of claim 4, **characterized in that** the heating stage occurs at between 40 and 90 °C for a period of between 10 and 30 minutes.

6. The process for producing gluten-free cereal flours of claim 2, **characterized in that** the means for heating (2) comprise a plurality of infrared lamps (6) internally connected to a chamber (7) and directed towards the flour (1).

7. The process of claim 6, **characterized in that** the plurality of lamps (6) is arranged at a distance of between 200 and 600 mm from the flour (1).

8. The process of claim 6, **characterized in that** the heating stage is performed for a period of between 10 and 30 minutes.

9. The process of claims 3, 4 and 6, **characterized in that** the blender motor (3) preferably comprises a blade blender (5) set in rotation by a motor (M).

10. The process of claim 2, **characterized in that** the means for heating (2) comprise a microwave oven (8) having a rest plane (9) on which the flour (1) is arranged.

11. The process of claim 10, **characterized in that** the heating stage lasts for a period of between 1 and 5 minutes.

12. The process of claims 3 and 10, **characterized in that** the blender motor (3) comprises a motor (M) of known type, connected to and rotating the rest plane (9).
